# FASCICULE DE BREVET EUROPEEN

(11) **EP 3 031 690 B1**
(45) Date de publication et mention de la délivrance du brevet: **09.08.2017**
(21) Numéro de dépôt: 15195236.3
(22) Date de dépôt: 18.11.2015
(51) Int. Cl.: B61C 5/02, B61C 17/04

(54) **DISPOSITIF AÉRAULIQUE DE REFROIDISSEMENT D'UN ÉLÉMENT D'UN VÉHICULE FERROVIAIRE ET VÉHICULE FERROVIAIRE CORRESPONDANT**
LUFTKÜHLVORRICHTUNG EINES ELEMENTS EINES SCHIENENFAHRZEUGS, UND ENTSPRECHENDES SCHIENENFAHRZEUG
AIR COOLING DEVICE FOR A RAILWAY VEHICLE ELEMENT AND RAIL VEHICLE CORRESPONDING

(30) Priorité: 03.12.2014 FR 1461884
(43) Date de publication de la demande: 15.06.2016
(73) Titulaire: ALSTOM Transport Technologies, 93400 Saint-Ouen (FR)
(72) Inventeur: NICOLAU, Sébastien, 65100 Loubajac (FR); CORNU, Denis, 59970 Odomez (FR)
(74) Mandataire: Lavoix

(56) Documents cités:
- EP-A1- 0 578 549
- WO-A1-2008/031752
- DE-B3-102012 216 746
- FR-A- 509 662
- FR-A- 1 591 809
- US-A- 2 235 205

## Description

La présente invention concerne un dispositif aéraulique de refroidissement d'un élément d'un véhicule ferroviaire, destiné à être placé sur une toiture dudit véhicule ferroviaire, du type comprenant un conduit, qui s'étend sensiblement longitudinalement par rapport au véhicule ferroviaire et qui comporte successivement une portion avant, munie d'une ouverture avant pour l'admission d'air, une portion centrale, dans laquelle est logé ledit élément à refroidir, et une portion arrière, munie d'une ouverture arrière pour l'évacuation d'air.

L'invention concerne plus particulièrement un dispositif aéraulique de refroidissement des tubes de circulation d'un fluide caloporteur d'un condenseur d'un dispositif de refroidissement, notamment un dispositif de refroidissement des composants électroniques de puissance pour l'alimentation des moteurs de traction du véhicule.

Pour assurer le fonctionnement d'un tel condenseur avec un bon rendement, il est nécessaire de générer un flux d'air autour des tubes, de manière à faciliter l'échange de chaleur entre les tubes et l'air qui les environne.

Le document EP 0 578 549 décrit un dispositif aéraulique de refroidissement comportant un conduit de circulation d'air à l'intérieur duquel est logé un élément à refroidir, en l'occurrence un rhéostat de freinage. Le conduit possède des portions avant et arrière, formant des écopes mobiles pouvant être déployées au-dessus du capotage de toiture du véhicule ferroviaire, afin de dévier une fraction de l'air s'écoulant le long du véhicule en mouvement, pour le faire circuler autour de l'élément à refroidir.

Toutefois, un tel dispositif aéraulique de refroidissement ne donne pas entièrement satisfaction. Le débit d'air transitant par le conduit est vulnérable à une défaillance mécanique des vérins d'actionnement des portions avant et arrière. Ainsi, la solution à écopes mobiles n'est pas pratique.

En outre, un tel dispositif aéraulique de refroidissement est sensible à la vitesse du véhicule. A faible vitesse, le débit d'air amener sur l'élément à refroidir est insuffisant. A haute vitesse, la couche limite de l'écoulement d'air autour du véhicule ferroviaire a tendance à se décoller et à s'écarter des parois externes du véhicule et à passer au-delà des écopes avant et arrière. De ce fait, le débit d'air capté par le dispositif est insuffisant pour assurer un refroidissement efficace.

Le document WO 2008/031752 divulgue un dispositif aéraulique comprenant un conduit dont le profil, entre une ouverture avant pour l'admission d'air et une ouverture arrière pour l'évacuation d'air, évolue de manière à générer une accélération du flux d'air dans le conduit par effet Venturi,

L'invention a donc pour but de palier les problèmes précités.

A cet effet, l'invention a pour objet un dispositif et un véhicule ferroviaire selon les revendications.

L'invention sera mieux comprise à la lecture de la description qui va suivre, donnée uniquement à titre d'exemple et faite en se référant aux figures annexées parmi lesquelles :
- la figure 1 est une vue en perspective d'un véhicule ferroviaire comprenant un dispositif aéraulique selon un exemple de mode de réalisation de l'invention ;
- la figure 2 est une vue en perspective du dispositif aéraulique de refroidissement équipant le véhicule ferroviaire de la figure 1, représenté partiellement, et dont certaines parois sont représentées en transparence ; et,
- la figure 3 est une vue en coupe, représentée partiellement, selon un plan longitudinal au véhicule, du dispositif de refroidissement de la figure 2.

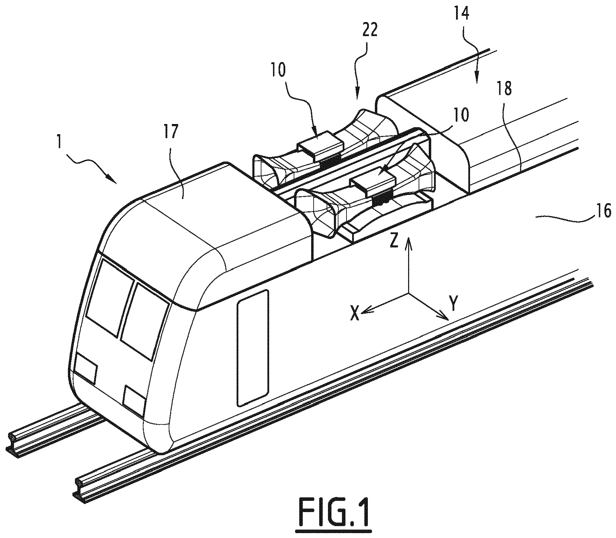

La figure 1 est une représentation générale d'un véhicule ferroviaire 1.

Dans la présente description, un repère XYZ est associé au véhicule 1, avec l'axe X, l'axe longitudinal du véhicule 1, orienté de l'arrière vers l'avant selon le sens de déplacement du véhicule 1 ; l'axe Y, l'axe transversal du véhicule ferroviaire orienté de droite à gauche ; et l'axe Z, l'axe vertical du véhicule 1, orienté de bas en haut.

Le véhicule 1 comporte au moins une voiture 14, dont la caisse comporte des parois latérale 16 et une toiture 18.

La toiture 18 porte un capotage 17 pour les équipements du véhicule placés en toiture.

En particulier, le capotage 17 délimite un logement 22, ouvert par le dessus, de réception de deux dispositifs aérauliques de refroidissement 10.

Chaque dispositif 10 est disposé, sur la toiture 18 du véhicule 1, entre deux parois transversales avant et arrière du capotage 17. Les dispositifs 10 sont disposés symétriquement par rapport à un plan médian X-Z de la voiture 14.

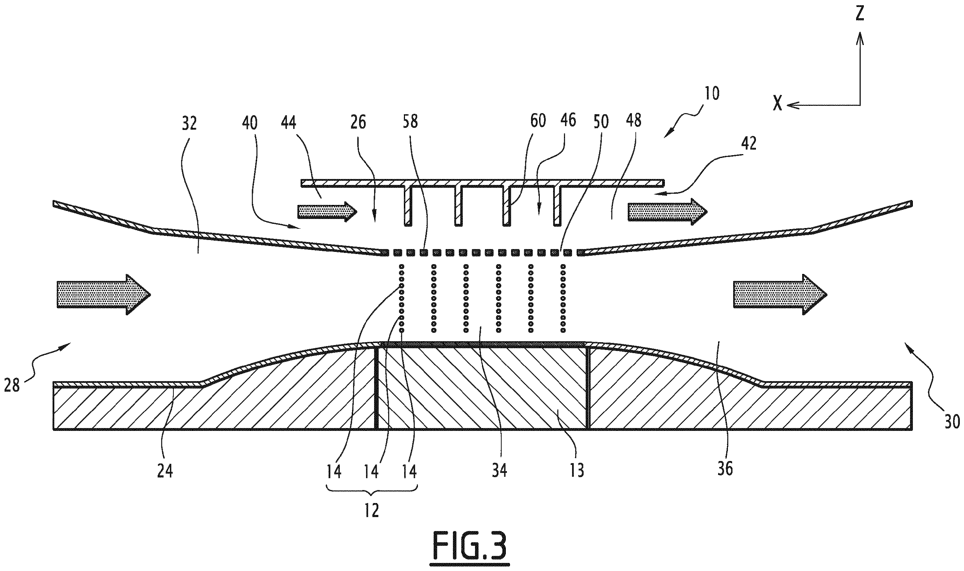

Un dispositif aéraulique de refroidissement 10 est destiné à refroidir la partie condenseur 12 d'un dispositif de refroidissement 13 (figure 3) d'un ensemble de transistors bipolaires à grille isolée (connu sous l'acronyme anglais « IGBT » pour « Insulated Gate Bipolar Transistor ») pour l'alimentation des moteurs de traction du véhicule.

Le condenseur 12 est constitué par une pluralité de tubes 14 de circulation d'un fluide caloporteur logés à l'intérieur du dispositif 10 comme cela sera décrit ci-dessous.

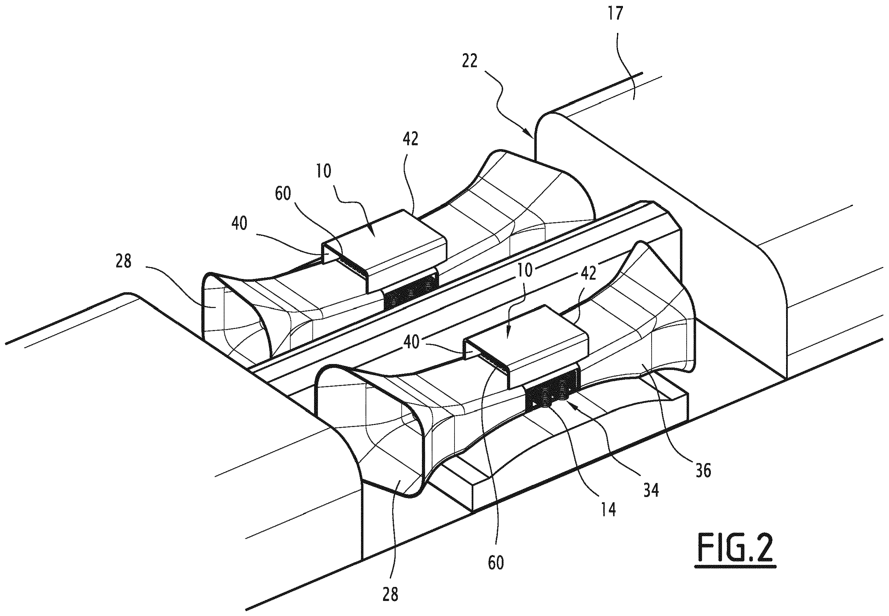

Comme cela est représenté en coupe selon un plan parallèle au plan X-Z sur les figures 2 et 3, le dispositif 10 comprend un conduit principal 24 et un conduit secondaire 26, un passage 50 de circulation d'air étant ménagé entre le conduit principal 24 et le conduit secondaire 26.

Le conduit principal 24 s'étend sensiblement longitudinalement.

Entre une ouverture avant 28 et une ouverture arrière 30, le conduit principal 24 comprend successivement, de l'avant vers l'arrière, une portion avant 32, une portion centrale 34 et une portion arrière 36.

La portion centrale 34 est la portion à l'intérieur de laquelle sont logés les tubes 14 du condenseur 12 à refroidir. Ceux-ci sont montés de manière à être disposés parallèlement à la direction transversale Y.

La portion avant 32 constitue une écope avant d'admission d'air frais dans le conduit principal 24.

La portion avant 32 est évasée de sorte que l'ouverture avant 28 s'étend, en projection dans un plan transversal Y-Z, au plus près du gabarit du véhicule 1, de manière à capter les filets d'air d'écoulant le long du capotage 17, à la fois sur le dessus et sur les côtés de celui-ci.

La portion arrière 36 constitue une écope arrière de refoulement d'air chaud du conduit principal 24.

La portion arrière est évasée de sorte que l'ouverture arrière 30 s'étend, en projection dans un plan transversal Y-Z, au plus prêt du gabarit du véhicule 1, de manière à refouler l'air circulant dans le conduit principal 24 au-dessus et sur les côtés du capotage 17.

Les parois du conduit principal 24 présentent, selon le plan X-Z, un profil tel que la section transversale du conduit diminue de l'ouverture avant 28 vers la portion centrale 34 puis augmente de la portion centrale 34 vers l'ouverture arrière 30.

Plus précisément, l'évolution longitudinale de la section transversale du conduit principal 24 varie de manière à générer une accélération du flux d'air par effet Venturi dans la portion centrale 34.

La portion avant 32 présente ainsi une section transversale dont la surface diminue de l'avant vers l'arrière. La variation de la surface de la section transversale est continue depuis l'ouverture avant 28 jusqu'à l'entrée de la portion centrale 34.

Le ratio entre la surface de la section transversale de la portion avant 32 au niveau de l'ouverture avant 28 et la surface de la section transversale de la portion avant 32 au niveau de sa jonction avec la portion centrale 34 est supérieure à 2, avantageusement compris entre 2 et 3.

La portion arrière 36 présente ainsi une section transversale dont la surface augmente de l'avant vers l'arrière. La variation de la surface de la section transversale est continue depuis la jonction avec la portion centrale 34 jusqu'à l'ouverture arrière 30.

Le ratio entre la surface de la section transversale de la portion arrière 36 au niveau de l'ouverture arrière 30 et la surface de la section transversale de la portion arrière 36 au niveau de sa jonction avec la portion centrale 34 est supérieure à 2, avantageusement compris entre 2 et 3.

Par la géométrie adaptée du conduit principal 24, l'air est accéléré de manière à circuler avec une vitesse adaptée autour des tubes 14 à refroidir. Cette accélération permet de compenser une vitesse faible d'admission dans la portion avant 32 du conduit principal 24, vitesse qui serait insuffisante pour refroidir l'élément à refroidir.

Ainsi, même pour une faible vitesse de circulation du véhicule ferroviaire, le débit d'air circulant dans la portion centrale est suffisamment important pour permettre d'évacuer la quantité de chaleur nécessaire à un fonctionnement efficace du dispositif à refroidir.

De préférence, pour améliorer encore les performances du conduit principal 24, le dispositif 10 comporte un conduit secondaire 26, s'étendant sensiblement parallèlement et au-dessus du conduit principal 24, dans le sens longitudinal du véhicule ferroviaire.

Entre un orifice avant 40 et un orifice arrière 42, le conduit secondaire 26 comprend successivement, de l'avant vers l'arrière, une partie avant 44, une partie centrale 46 et une partie arrière 48.

La partie centrale 46 est située au-dessus de la portion centrale 34 du conduit principal 24.

L'orifice avant 40 permet l'admission d'air frais depuis l'extérieur dans le conduit secondaire 26. La partie avant 44 forme une écope permettant de capter l'air et l'amener vers la partie centrale 46.

L'orifice arrière 42 permet l'éjection d'air chaud vers l'extérieur depuis le conduit secondaire 26. La partie arrière 48 forme une écope permettant l'éjection de l'air de la partie centrale 46.

Les parois latérales, supérieure et inférieure de la partie centrale 46 définissent une chambre.

La paroi inférieure de la partie centrale 46 est munie d'un passage 50 permettant une communication fluidique entre la portion centrale 34 et la partie centrale 46. Une grille 58 est placée en travers du passage 50.

La section transversale du conduit secondaire 26 est sensiblement constante de l'avant à l'arrière.

La partie centrale 46 du conduit secondaire est munie de déflecteurs 60 permettant de générer des turbulences dans le flux d'air circulant dans le du conduit secondaire 26.

Les déflecteurs 60 sont portés par la paroi supérieure de la partie centrale 46. Les déflecteurs 60 font saillie depuis la paroi supérieure vers la grille 58.

Les déflecteurs 60 prennent la forme d'une tige, d'un plan ou toute autre forme propre à engendrer des turbulences dans l'écoulement d'air capté par la partie avant 44.

Ainsi, la partie centrale 46 est conçue pour générer des turbulences dans le flux d'air circulant dans le conduit secondaire. Ces turbulences sont propres à générer une dépression au niveau du passage 50, et, par conséquent, dans la portion centrale 34 du conduit principal 24.

De préférence, la dépression créée par les turbulences compense la perte de charge dans le conduit principal causée par les tubes 14 à refroidir.

Le passage 50 entre les conduits principal et secondaire permet à une fraction du flux d'air admis dans le conduit principal, de passer dans le conduit secondaire et d'être éjecté par l'orifice arrière du conduit secondaire.

L'augmentation de la dépression dans la portion centrale 34 du conduit principal 24 accélère davantage l'air capté par la portion avant 28.

Le conduit secondaire 26 permet ainsi d'améliorer l'aéraulique du conduit principal 24.

Le dispositif aéraulique 10 de refroidissement garantit un refroidissement sûr, sans recours à un ventilateur ou à une autre pièce mécanique mobile ou rotative.

Le dispositif aéraulique de refroidissement exploite avantageusement l'effet Venturi pour refroidir un condenseur.

## Revendications

1. Dispositif aéraulique (10) de refroidissement d'un élément (12) d'un véhicule ferroviaire (1), comprenant un conduit (24), le dispositif aéraulique (10) étant destiné à être placé sur une toiture (18) dudit véhicule ferroviaire (1) de manière que ledit conduit s'étende sensiblement longitudinalement par rapport au véhicule ferroviaire (1), ledit conduit comportant successivement une portion avant (32), munie d'une ouverture avant (28) pour l'admission d'air, une portion centrale (34), dans laquelle est logé ledit élément (12) à refroidir, et une portion arrière (36), munie d'une ouverture arrière (30) pour l'évacuation d'air, une surface d'une section transversale du conduit (24) évolue, de l'ouverture avant (28) à l'ouverture arrière (30), de manière à générer une accélération du flux d'air dans le conduit (24) par effet Venturi, **caractérisé en ce que**, ledit conduit (24) étant un conduit principal, le dispositif comprend, en outre, un conduit secondaire (26) s'étendant sensiblement parallèlement au conduit principal, le conduit secondaire (26) comportant une partie avant (44), munie d'un orifice avant (40) pour l'admission d'air, une partie centrale (60), et une partie arrière (48), munie d'un orifice arrière (42) pour l'évacuation d'air, une surface d'une section transversale du conduit secondaire (26) évoluant, de l'orifice avant (40) à l'orifice arrière (42) du conduit secondaire, de manière à générer des perturbations de nature à favoriser l'accélération du flux d'air dans le conduit principal.

2. Dispositif aéraulique (10) selon la revendication 1, dans lequel la surface de la section transversale de la portion centrale (34) dudit conduit principal est inférieure à la surface de la section transversale de la portion avant (32) dudit conduit principal.

3. Dispositif aéraulique (10) selon la revendication 2, dans lequel la surface de la section transversale de la portion centrale (34) dudit conduit principal est inférieure à la surface de la section transversale de la portion arrière (36) dudit conduit principal.

4. Dispositif aéraulique (10) selon les revendications 1 à 3, dans lequel les ouvertures avant (28) et arrière (30) dudit conduit principal sont disposées sensiblement transversalement à un axe longitudinal du véhicule ferroviaire (1).

5. Dispositif aéraulique (10) selon l'une quelconque des revendications 1 à 4, dans lequel le conduit secondaire (26) et le conduit principal (24) sont connectés l'un à l'autre par un passage (50) autorisant une circulation d'air, le passage s'étendant entre la portion centrale (34) du conduit principal et la partie centrale (46) du conduit secondaire, les perturbations favorisant l'accélération du flux d'air dans la portion centrale (34) du conduit principal (24).

6. Dispositif aéraulique (10) selon l'une quelconque des revendications 1 à 5, dans lequel la partie centrale (46) du conduit secondaire est munie d'au moins un déflecteur (60) propre à générer des turbulences dans le flux d'air circulant dans le conduit secondaire (26).

7. Dispositif aéraulique (10) selon la revendication 6, dans lequel le déflecteur (60) est porté par une face supérieure de la partie centrale du conduit secondaire (26) et fait saillie dans la partie centrale (46) du conduit secondaire.

8. Dispositif aéraulique (10) selon la revendication 7, dans lequel le déflecteur (60) est une tige ou une plaque.

9. Véhicule ferroviaire (1) comprenant un élément à refroidir (12), **caractérisé en ce qu'**il comporte un dispositif aéraulique (10) de refroidissement selon l'une quelconque des revendications 1 à 8, propre à refroidir ledit élément à refroidir (12), le dispositif (10) étant fixé sur une toiture (18) du véhicule de manière à ce qu'un axe du conduit principal (24) s'étende sensiblement parallèlement à un axe longitudinal du véhicule (1).

## Patentansprüche

1. Lufttechnische Vorrichtung (10) zur Kühlung eines Elements (12) eines Schienenfahrzeugs (1), aufweisend eine Leitung (24), wobei die lufttechnische Vorrichtung (10) dazu bestimmt ist auf einem Dach (18) des besagten Schienenfahrzeugs (1) in einer Weise platziert zu werden, so dass die besagte Leitung sich bezüglich des Schienenfahrzeugs (1) im Wesentlichen längs erstreckt, wobei die besagte Leitung aufweist aufeinanderfolgend einen vorderen Abschnitt (32), der mit einer vorderen Öffnung (28) zum Einlassen von Luft ausgestattet ist, einen zentralen Abschnitt (34), in welchem das besagte zu kühlende Element (12) untergebracht ist, und einen hinteren Abschnitt (36), der mit einer hinteren Öffnung (30) zum Auslassen von Luft ausgestattet ist, wobei sich eine Querschnittsfläche der Leitung (24) von der vorderen Öffnung (28) aus bis zur hinteren Öffnung (30) derart ändert, dass eine Beschleunigung der Luftströmung in der Leitung (24) mittels Venturi-Effekts generiert wird, **dadurch gekennzeichnet, dass** die besagte Leitung (24) eine Hauptleitung ist, wobei die Vorrichtung ferner aufweist eine Sekundärleitung (26), die sich im Wesentlichen parallel zur Hauptleitung erstreckt, wobei die Sekundärleitung (26) aufweist einen vorderen Abschnitt (44), der mit einer vorderen Öffnung (40) zum Einlassen von Luft ausgestattet ist, einen zentralen Abschnitt (60) und einen hinteren Abschnitt (48), der mit einer hinteren Öffnung(42) zum Auslassen von Luft ausgestattet ist, wobei eine Querschnittsfläche der Sekundärleitung (26) sich von der vorderen Öffnung (40) aus bis zur hinteren Öffnung (42) der Sekundärleitung in einer Weise ändert, dass Perturbationen generiert werden von einer Art, um die Beschleunigung der Luftströmung in dem Hauptrohr zu begünstigen.

2. Lufttechnische Vorrichtung (10) gemäß Anspruch 1, wobei die Querschnittsfläche des zentralen Abschnitts (34) der besagten Hauptleitung kleiner ist als die Querschnittsfläche des vorderen Abschnitts (32) der besagten Hauptleitung.

3. Lufttechnische Vorrichtung (10) gemäß Anspruch 2, wobei die Querschnittsfläche des zentralen Abschnitts (34) der besagten Hauptleitung kleiner ist als die Querschnittsfläche des hinteren Abschnitts (36) der besagten Hauptleitung.

4. Lufttechnische Vorrichtung (10) gemäß den Ansprüchen 1 bis 3, wobei die vordere (28) und die hintere (30) Öffnung der besagten Hauptleitung im Wesentlichen quer zu einer Längsachse des Schienenfahrzeugs (1) angeordnet sind.

5. Lufttechnische Vorrichtung (10) gemäß irgendeinem der Ansprüche 1 bis 4, wobei die Sekundärleitung (26) und die Hauptleitung (24) über eine Passage (50) miteinander verbunden sind, die eine Luftzirkulation ermöglicht, wobei sich die Passage zwischen dem zentralen Abschnitt (34) der Hauptleitung und dem zentralen Abschnitt (46) der Sekundärleitung erstreckt, wobei die Perturbationen die Beschleunigung der Luftströmung in dem zentralen Abschnitt (34) der Hauptleitung (24) begünstigen.

6. Lufttechnische Vorrichtung (10) gemäß irgendeinem der Ansprüche 1 bis 5, wobei der zentrale Abschnitt (46) der Sekundärleitung mit wenigstens einem Deflektor (60) ausgestattet ist, der geeignet ist, Turbulenzen in dem Luftstrom zu erzeugen, der in der Sekundärleitung (26) zirkuliert.

7. Lufttechnische Vorrichtung (10) gemäß Anspruch 6, wobei der Deflektor (60) von einer oberen Seite des zentralen Abschnitts der Sekundärleitung (26) getragen ist und in den zentralen Abschnitt (46) der Sekundärleitung hinein vorsteht.

8. Lufttechnische Vorrichtung (10) gemäß Anspruch 7, wobei der Deflektor (60) eine Stange oder eine Platte ist.

9. Schienenfahrzeug (1) mit einem zu kühlenden Element (12), **dadurch gekennzeichnet, dass** es eine lufttechnische Vorrichtung (10) zur Kühlung gemäß irgendeinem der Ansprüche 1 bis 8 aufweist, das geeignet ist, um das besagte zu kühlende Element (12) zu kühlen, wobei die Vorrichtung (10) auf einem Dach (18) des Fahrzeugs derart fixiert ist, dass sich eine Achse der Hauptleitung (24) im Wesentlichen parallel zu einer Längsachse des Fahrzeugs (1) erstreckt.

## Claims

1. An air flow device (10) for cooling an element (12) of a rail vehicle (1), comprising a conduit (24), the air flow device (10) being designed to be placed on a roof (18) of said rail vehicle (1) in a manner such that said conduit extends substantially longitudinally in relation to said rail vehicle (1), said conduit including successively a front portion (32), equipped with a front opening (28) for the intake of air, a central portion (34), in which is housed said element (12) to be cooled, and a rear portion (36), equipped with a rear opening (30) for the discharge of exhaust air, a surface of a transverse cross-section of the conduit (24) evolves, from the front opening (28) to the rear opening (30), in a manner so as to generate an acceleration of the flow of air in the conduit (24) by means of the Venturi effect, **characterized in that** said conduit (24) being a main conduit, the device includes, in addition, a secondary conduit (26) which extends substantially parallel to the main conduit, the secondary conduit (26) comprises a front part (44), equipped with a front orifice (40) for air intake, a central part (60), and a rear part (48), equipped with a rear orifice (42) for air discharge, a surface of a transverse cross section of the secondary conduit (26) evolving, from the front orifice (40) to the rear orifice (42) of the secondary conduit in a manner so as to generate turbulences promoting the acceleration of the flow of air in the main conduit.

2. An air flow device (10) according to claim 1, in which the surface of the transverse cross section of the central portion (34) of said main conduit is lower than the surface of the transverse cross section of the front portion (32) of said main conduit.

3. An air flow device (10) according to claim 2, in which the surface of the transverse cross section of the central portion (34) of said main conduit is lower than the surface of the transverse cross section of the rear portion (36) of said main conduit.

4. An air flow device (10) according to any one of claims 1 to 3, in which the front (28) and rear openings (30) of said main conduit are arranged substantially transversely to a longitudinal axis of the railway vehicle (1).

5. An air flow device (10) according to any one of claims 1 to 4, in which the secondary conduit (26) and the main conduit (24) are connected to one another by a passage (50) that permits circulation of air, the passage extending between the central portion (34) of said main conduit and the central part (46) of said secondary conduit, the disturbances promoting the acceleration of the flow of air in the central portion (34) of the main conduit (24).

6. An air flow device (10) according to any one of claims 1 to 5, in which the central part (46) of the secondary conduit is equipped with at least one deflector (60) generating turbulences in the flow of air circulating into the secondary conduit (26).

7. An air flow device (10) according to claim 6, in which the deflector (60) is borne by a top surface of the central part of the secondary conduit (26) and protrudes out in the central part (46) of the secondary conduit.

8. An air flow device (10) according to claim 7, in which the deflector (60) is a rod or a plate.

9. A rail vehicle (1) comprising an element to be cooled (12), **characterized in that** it has a (10) cooling air flow device according to any one of claims 1 to 8, capable of cooling said element to be cooled (12), the device (10) being fixed on a roof (18) of the vehicle in a manner such that one axis of the main conduit (24) extends substantially parallel to a longitudinal axis of the vehicle (1).
